(19) Europäisches Patentamt
European Patent Office
Office européen des brevets

(11) **EP 4 105 679 A2**

(12) **EUROPÄISCHE PATENTANMELDUNG**

(43) Veröffentlichungstag:
**21.12.2022 Patentblatt 2022/51**

(21) Anmeldenummer: **22178874.8**

(22) Anmeldetag: **14.06.2022**

(51) Internationale Patentklassifikation (IPC):
**G01S 7/35** (2006.01)    **G01S 7/41** (2006.01)
**G01S 13/34** (2006.01)    **G01S 13/87** (2006.01)
**G01S 13/88** (2006.01)    **H01Q 15/14** (2006.01)
**G01S 13/36** (2006.01)

(52) Gemeinsame Patentklassifikation (CPC):
**G01S 7/354; G01S 7/412; G01S 13/34;**
**G01S 13/876; G01S 13/881; H01Q 15/14;**
G01S 13/343; G01S 13/36

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **16.06.2021   DE 102021206165**

(71) Anmelder: **Pepperl+Fuchs SE**
**68307 Mannheim (DE)**

(72) Erfinder:
• **ROTH, Tobias**
**12277 Berlin (DE)**
• **HARTMANN, Markus**
**12277 Berlin (DE)**

(74) Vertreter: **Fischer, Uwe**
**Patentanwalt**
**Moritzstraße 22**
**13597 Berlin (DE)**

(54) **RADARMESSEINRICHTUNG UND -VERFAHREN MIT ABGESPEICHERTEN REFLEKTORIDENTITÄTSANGABEN**

(57)    Die Erfindung bezieht sich unter anderem auf eine Messeinrichtung (10) mit einem Radarsender (11) zum Erzeugen eines Radarsignals (S), einer Radarempfangseinrichtung (12) zum Messen eines Radarreflexionssignals (R) unter Bildung eines Messsignals (M) und einer Auswerteinrichtung (13) zum Auswerten des Messsignals (M). Erfindungsgemäß ist vorgesehen, dass die Auswerteinrichtung (13) das Messsignal (M) dahingehend prüft, ob dieses einen charakteristischen Signalverlauf aufweist, der als Referenzverlauf in der Auswerteinrichtung (13) mit Bezug auf eine zugeordnete Reflektoridentitätsangabe abgespeichert ist, und die Auswerteinrichtung (13) - im Falle eines Erkennens des charakteristischen Signalverlaufs - das Messsignal (M) auswertet und anhand des Messsignals (M) ein Messergebnis (E) bildet und andernfalls das Messsignal (M) verwirft.

Fig.1

**Beschreibung**

Die Erfindung bezieht sich auf Messeinrichtungen und Messverfahren auf der Basis von Radarsignalen.

Allgemein bekannt sind Messeinrichtungen mit einem Radarsender zum Erzeugen eines Radarsignals, einer Radarempfangseinrichtung zum Messen eines Radarreflexionssignals unter Bildung eines Messsignals und einer Auswerteinrichtung zum Auswerten des Messsignals.

Der Erfindung liegt die Aufgabe zugrunde, eine Messeinrichtung anzugeben, bei der Messfehler durch Störreflexionen minimiert werden.

Diese Aufgabe wird erfindungsgemäß durch eine Messeinrichtung mit den Merkmalen gemäß Patentanspruch 1 gelöst. Vorteilhafte Ausgestaltungen der erfindungsgemäßen Messeinrichtung sind in Unteransprüchen angegeben.

Danach ist erfindungsgemäß vorgesehen, dass die Auswerteinrichtung das Messsignal dahingehend prüft, ob dieses einen charakteristischen Signalverlauf aufweist, der als Referenzverlauf in der Auswerteinrichtung mit Bezug auf eine zugeordnete Reflektoridentitätsangabe abgespeichert ist, und die Auswerteinrichtung - im Falle eines Erkennens des charakteristischen Signalverlaufs - das Messsignal auswertet und anhand des Messsignals ein Messergebnis bildet und andernfalls das Messsignal verwirft.

Ein wesentlicher Vorteil der erfindungsgemäßen Messeinrichtung ist darin zu sehen, dass sich die Auswerteinrichtung auf die Auswertung solcher Radarreflexionssignale beschränkt, die von vordefinierten bzw. bekannten Reflektoren stammen. Mit anderen Worten findet eine reflektorbezogene Vorfilterung der Radarreflexionssignale statt. Radarreflexionssignale von anderen reflektierenden Stellen, also mit anderen Worten Störsignale, werden von der Auswertung ausgeschlossen, wodurch die Qualität des Messergebnisses gegenüber Messeinrichtungen ohne reflektorbezogene Vorfilterung erhöht wird.

Vorteilhaft ist es, wenn in der Auswerteinrichtung eine Vielzahl an charakteristischen Signalverläufen abgespeichert ist, denen jeweils eine Reflektoridentitätsangabe zugeordnet ist, und die Auswerteinrichtung - im Falle eines Erkennens eines der charakteristischen Signalverläufe - dem jeweiligen Messergebnis die Reflektoridentitätsangabe zuordnet, die dem jeweils erkannten charakteristischen Signalverlauf entspricht, und das jeweilige Messergebnis mit der zugehörigen Reflektoridentitätsangabe abspeichert.

Mit Blick auf eine Verarbeitung der Messsignale wird es als vorteilhaft angesehen, wenn sich die Messeinrichtung anhand zumindest zweier Messergebnisse, denen jeweils eine Reflektoridentitätsangabe zugeordnet worden ist, selbst ortet, und zwar anhand eines Ortsangabendatensatzes, in dem zu den Reflektoridentitätsangaben jeweils Standorte abgespeichert sind.

Die Messeinrichtung ist vorzugsweise dazu ausgebildet, den Ortsangabendatensatz selbst zu erzeugen, wenn sie während einer Kalibrationsfahrt zu den Radarreflexionskörpern, zu denen Reflektoridentitätsangaben abgespeichert sind, oder zumindest zu einer Gruppe dieser Radarreflexionskörper hinbewegt wird.

Besonders einfach und damit vorteilhaft lassen sich die Radarreflexionssignale auswerten, wenn der Radarsender ein frequenzmoduliertes Radarsignal erzeugt und die Auswerteinrichtung das Radarsignal und das Radarreflexionssignal unter Bildung eines Mischsignals mischt.

Vorteilhaft ist es, wenn die Auswerteinrichtung das Messergebnis durch Auswerten des Zwischenfrequenzspektrums des Mischsignals bildet.

Besonders vorteilhaft ist es, wenn die Auswerteinrichtung das Radarsignal und das Radarreflexionssignal unter Bildung eines Mischsignals mischt und das Mischsignal dahingehend auswertet, ob das Zwischenfrequenzspektrum des Mischsignals den oder einen der charakteristischen Signalverläufe aufweist.

Ein reflektierender Oberflächenabschnitt eines jeden der Radarreflexionskörper, denen eine Reflektoridentitätsangabe zugeordnet ist, weist vorzugsweise eine reflektorindivuell vordefinierte Oberflächenstruktur auf, die den charakteristischen Signalverlauf des jeweiligen Radarreflexionskörpers, insbesondere das Zwischenfrequenzspektrum des Mischsignals, festlegt.

Die vordefinierte Oberflächenstruktur weist bevorzugt ein Stufenprofil mit zumindest einer Stufe zwischen zwei benachbarten, vorzugsweise planen, Plateauflächen auf.

Die Stufenhöhe der zumindest einen Stufe und/oder der Abstand von Zwischenfrequenzen zwischen zumindest zwei Signalspitzen, die von den durch die zumindest eine Stufe getrennten benachbarten Plateauflächen im Zwischenfrequenzspektrum erzeugt werden, sind vorzugsweise in der Auswerteinrichtung abgespeichert; die Auswerteinrichtung erkennt vorzugsweise die vordefinierte Oberflächenstruktur anhand des Abstands der zwei Signalspitzen im Zwischenfrequenzspektrum.

Mindestens eine Stufenhöhe beträgt vorzugsweise einen rationalen Bruchteil der Wellenlänge des Radarsignals, insbesondere $\lambda/8$.

Auch ist es vorteilhaft, wenn die vordefinierte Oberflächenstruktur ein dielektrisches Stufenprofil, das durch die Hintereinanderanordnung von Materialien unterschiedlicher Dielektrizitätszahlen gebildet wird, aufweist.

Die Auswerteinrichtung erkennt die vordefinierte Oberflächenstruktur bzw. deren charakteristischen Signalverlauf im Messsignal vorzugsweise anhand eines Mustererkennungsverfahrens, insbesondere eines solchen, das seitens der Auswerteinrichtung durch maschinelles Lernen erlernt worden ist.

Die Messeinrichtung ist bei einer bevorzugten Ausgestaltung eine Füllstandsmesseinrichtung, die anhand des Messergebnisses einen Füllstandsmesswert bildet.

Die Erfindung bezieht sich außerdem auf ein Fahrzeug, insbesondere Förderfahrzeug eines Fördersystems. Erfindungsgemäß ist diesbezüglich vorgesehen, dass das Fahrzeug eine Messeinrichtung, wie oben beschrieben, aufweist.

Das Fahrzeug ist vorzugsweise ein selbstfahrendes Fahrzeug und dazu ausgebildet, in einem Kalibrationsfahrtmodus betrieben zu werden, bei dem mit der Messeinrichtung Radarreflexionskörper, zu denen Reflektoridentitätsangaben abgespeichert sind, erfasst werden und das Fahrzeug anschließend zu den erfassten Radarreflexionskörpern gesteuert wird.

Die Messeinrichtung ist vorzugsweise dazu ausgebildet, einen Ortsangabendatensatz selbst zu erzeugen, der den jeweiligen Ort der angefahrenen Radarreflexionskörper beschreibt.

Auch ist es vorteilhaft, wenn sich die Messeinrichtung anschließend anhand zumindest zweier Messergebnisse, denen jeweils eine Reflektoridentitätsangabe zugeordnet ist, selbst ortet, und zwar anhand des Ortsangabendatensatzes, den sie zuvor selbst erstellt hat.

Die Erfindung bezieht sich außerdem auf eine Anordnung mit einer Messeinrichtung, wie oben beschrieben, und zumindest einem Radarreflexionskörper.

Bezüglich der Anordnung wird es als vorteilhaft angesehen, wenn ein reflektierender Oberflächenabschnitt eines jeden der Radarreflexionskörper eine individuelle Oberflächenstruktur aufweist, und in der Messeinrichtung eine Vielzahl an charakteristischen Signalverläufen und deren jeweilige Reflektoridentitätsangabe abgespeichert sind.

Der Radarreflexionskörper ist vorzugsweise schwimmfähig und scheibenförmig.

Besonders vorteilhaft ist es, wenn der Radarreflexionskörper zwei einander gegenüberliegende Außenflächen aufweist, jede der zwei Außenflächen jeweils dieselbe vordefinierte Oberflächenstruktur aufweist und sich der Radarreflexionskörper, wenn er in eine Flüssigkeit fällt, in der Flüssigkeit selbst ausrichtet, und zwar derart, dass eine beliebige der zwei Außenflächen aus der Flüssigkeit herausragt und die jeweils andere der Flüssigkeit zugewandt ist.

Alternativ kann der Radarreflexionskörper durch seine Masseverteilung (analog zu einem Kielboot) so ausgebildet sein, dass er sich, wenn er in eine Flüssigkeit fällt, in der Flüssigkeit selbst stets gleich ausrichtet und immer dieselbe Seite als Messseite aus der Flüssigkeit herausragt.

Die Erfindung bezieht sich außerdem auf ein Verfahren zum Bilden eines Messergebnisses, bei dem ein Radarsignal erzeugt wird, ein Radarreflexionssignal, das - bei Auftreffen des Radarsignals - von einem Radarreflexionskörper reflektiert wird, unter Bildung eines Messsignals gemessen wird und das Messsignal unter Bildung des Messergebnisses ausgewertet wird. Erfindungsgemäß ist vorgesehen, dass das Messsignal dahingehend geprüft wird, ob dieses einen charakteristischen Signalverlauf aufweist, der als Referenzverlauf in der Auswerteinrichtung mit Bezug auf eine zugeordnete Reflektoridentitätsangabe abgespeichert ist, und - im Falle eines Erkennens des charakteristischen Signalverlaufs - das Messsignal ausgewertet und anhand des Messsignals das Messergebnis gebildet wird und andernfalls das Messsignal verworfen wird.

Bezüglich der Vorteile des erfindungsgemäßen Verfahrens und vorteilhafter Ausgestaltungen des erfindungsgemäßen Verfahrens sei auf die obigen Ausführungen im Zusammenhang mit der erfindungsgemäßen Messeinrichtung und deren vorteilhafter Ausgestaltungen verwiesen.

Die Erfindung wird nachfolgend anhand von Ausführungsbeispielen näher erläutert; dabei zeigen beispielhaft

Fig. 1 - 3    Ausführungsbeispiele für erfindungsgemäße Anordnungen, die Messeinrichtungen und Radarreflexionskörper aufweisen, sowie beispielhaft Messsignalverläufe, die die Messeinrichtungen erzeugen,

Fig. 4 - 6    Ausführungsbeispiele für erfindungsgemäße Fahrzeuge, die mit Messeinrichtungen ausgestattet sind und sich anhand von Radarreflexionskörpern selbst orten können.

In den Figuren werden der Übersicht halber für identische oder vergleichbare Komponenten dieselben Bezugszeichen verwendet.

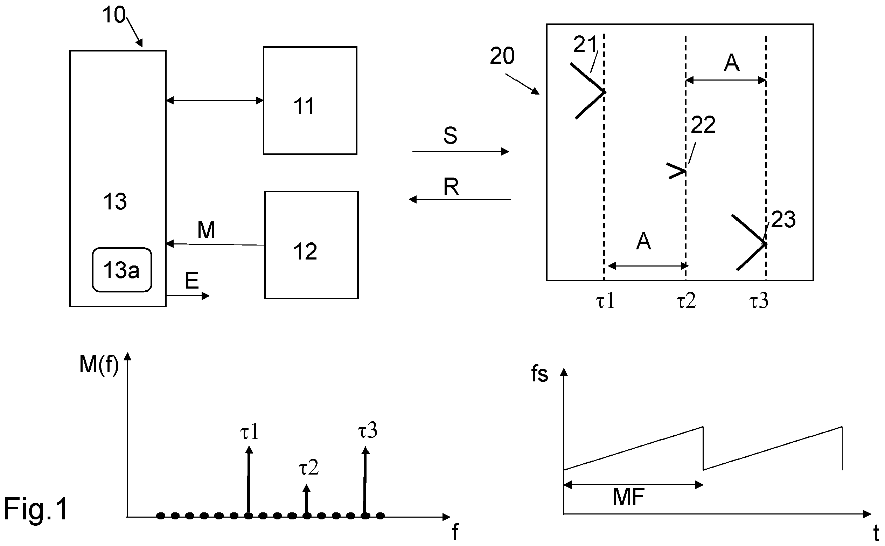

Die Figur 1 zeigt ein Ausführungsbeispiel für eine Messeinrichtung 10, die mit einem Radarsender 11 zum Erzeugen eines Radarsignals S, einer Radarempfangseinrichtung 12, die ein von einem Radarreflexionskörper, nachfolgend kurz Reflektor 20 genannt, reflektiertes Radarreflexionssignal R unter Bildung eines Empfangs- bzw. Messsignals M misst, und einer Auswerteinrichtung 13 zum Auswerten des Messsignals M ausgestattet ist.

Der Reflektor 20 weist mehrere unterschiedlich große, versetzt zueinander angeordnete Reflektorabschnitte 21-23 auf, um ein charakteristisches Amplitudenprofil im Frequenzspektrum des Radarreflexionssignals R und damit des Messsignals M zu erzeugen. Bei dem Ausführungsbeispiel gemäß Figur 1 ist zwecks Amplitudenmodulation der mittlere Reflektorabschnitt 22 deutlich kleiner als die beiden anderen Reflektorabschnitte 21 und 23.

Nachfolgend wird beispielhaft davon ausgegangen, dass der Radarsender 11 beim Erzeugen des Radarsignals S die Sendefrequenz fs rampenförmig über der Zeit t moduliert, wie in der Figur 1 skizziert ist, und dadurch Messfenster MF mit jeweils ansteigender Frequenz definiert. Aufgrund der Frequenzänderung über der Zeit t weist das Messsignal M für jeden der Reflektorabschnitte 21-23 - zum jeweiligen Empfangszeitpunkt - eine andere individuelle Frequenzdifferenz zur jeweiligen Sendefrequenz auf, weil aufgrund des räumlichen Versatzes der Reflektorabschnitte deren Signallaufzeit $\tau$1- $\tau$3 vom Radarsender 11 zum Reflektor 20 und von dort wieder zurück zur Radarempfangseinrichtung 12 unterschiedlich ist. Unter der Annahme eines rampenförmigen Frequenzanstiegs der Sendefrequenz fs des Radarsignals S über der Zeit t ist somit die Differenz zwischen der Frequenz der von dem entferntesten Reflektorabschnitt 23 reflektierten Strahlung und der Sendefrequenz zum Empfangszeitpunkt in der Radarempfangseinrichtung 12 am größten, wohingegen die Differenz zwischen der Frequenz der von dem dichtesten Reflektorabschnitt 21 reflektierten Strahlung und der Sendefrequenz zum Empfangszeitpunkt in der Radarempfangseinrichtung am kleinsten ist.

Bei dem Ausführungsbeispiel gemäß Figur 1 erzeugt der Reflektor 20 dabei sowohl eine Amplitudenmodulation (wegen der verschiedenen Radarquerschnitte bzw. Größen der Reflektorabschnitte) als auch eine Frequenzmodulation (wegen des Versatzes und der verschiedenen Signallaufzeiten).

Die Figur 1 zeigt anhand des Frequenzspektrums der Amplitude des Messsignals M über der Differenzfrequenz f, die sich zwischen der Frequenz des Messsignals M und der jeweiligen Sendefrequenz des Radarsignals S zum Empfangszeitpunkt ergibt, sodass der Reflektor 20 somit eine eindeutige Signatur in der Amplitude, der Phase und/oder der Frequenz des Messsignals M erzeugen kann. Man erkennt bei verschiedenen Frequenzen unterschiedliche Amplituden, deren Folge bzw. Frequenzlage die Auswerteinrichtung 13 identifizieren kann.

Die Auswerteinrichtung 13 kann daher das Messsignal M dahingehend prüfen, ob dieses im Frequenzbereich einen charakteristischen Signalverlauf aufweist, der als Referenzverlauf in einem Speicher 13a der Auswerteinrichtung 13 abgespeichert ist. Wird ein charakteristischer Signalverlauf erkannt, wird das Messsignal M ausgewertet und anhand des Messsignals M ein Messergebnis beispielsweise in Form eines Entfernungsmesswerts E oder eines Geschwindigkeitsmesswerts gebildet; andernfalls wird das Messsignal M verworfen.

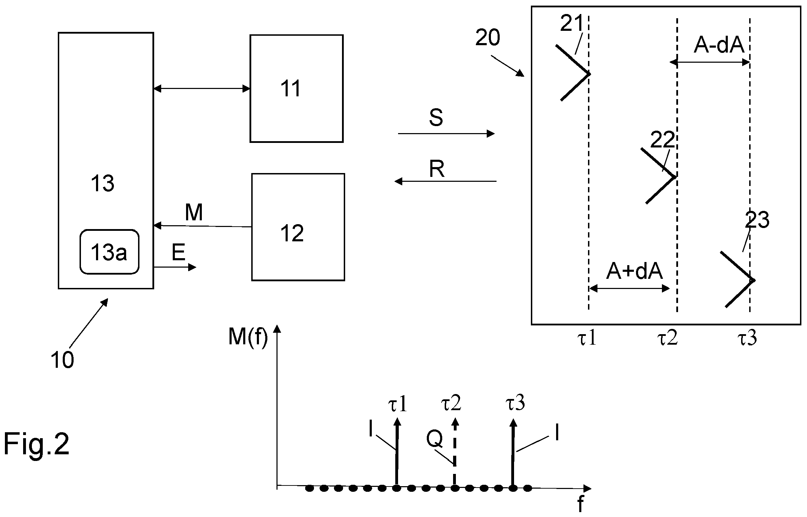

Alternativ oder zusätzlich kann eine Modulation der Phase erfolgen, wie beispielhaft in der Figur 2 gezeigt ist. Bei dem Ausführungsbeispiel gemäß Figur 2 sind mehrere gleich große Reflektorabschnitte 21-23 in einem gewissen Abstandsraster A zueinander angebracht, wobei der mittlere Reflektorabschnitt um eine zusätzliche vergleichsweise kleinere Distanz dA (dA < A/10) verschoben ist, um eine Phasenverschiebung im Messsignal M hervorzurufen.

In der Figur 2 entspricht jeder Punkt im Frequenzspektrum einem konkreten Abstand zwischen der Messeinrichtung 10 und dem Reflektor 20. Erfolgt eine geringe Verschiebung des Reflektors 20 zu diesem Punkt, erfolgt eine Phasendrehung im Signal. Bei einer komplexen Erfassung spiegelt sich diese Phasenverschiebung im Inphase-Anteil I und im Quadraturphase-Anteil Q wider und die Amplituden des IQ-Signals bilden eine charakteristische Folge. Typischerweise erfolgt die Verschiebung um einen Bruchteil der Trägerwellenlänge des Radarsignals S.

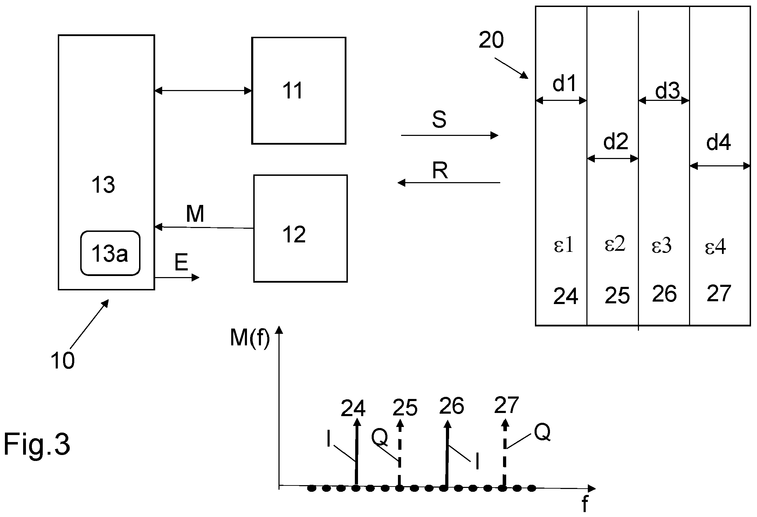

Eine weitere Möglichkeit, definierte Reflexionen in Amplitude und Phase zu realisieren, besteht in der Kombination von mehreren Schichten 24-27 von Materialen mit unterschiedlicher relativer Permittivität $\varepsilon$1 bis $\varepsilon$4 und einer Variation der Schichtdicken d1-d4. Die Figur 3 zeigt ein Ausführungsbeispiel für einen solchen mehrschichtigen Reflektor 20 sowie beispielhaft ein Messsignal M über der Differenzfrequenz f zwischen Sende- und jeweiliger Empfangsfrequenz. An jeder Grenzschicht tritt durch die Impedanzänderung eine Reflexion auf, jedoch auch eine Transmission. Durch mehrere solcher Schichten 24 bis 27 kann dadurch ein Amplituden- und Phasenmuster erzeugt werden, wie es beispielhaft ebenfalls in der Figur 3 gezeigt ist.

Auch ist es möglich, dass der Reflektor 20 als zeitlich veränderlicher Reflektor 20 ausgeführt ist, der über der Zeit einer Messung oder der Dauer mehrerer Messungen sein Reflexionsverhalten ändert, indem er z. B. seinen Radarquerschnitt variiert, wodurch es zu einer Amplitudenmodulation im Zeitbereich kommt. Eine solche zeitliche Änderung ist ebenso für die Phase realisierbar.

Die Folge, welche in Amplitude, Phase und/oder Frequenz über der Zeit oder der Distanz oder einer Kombination davon auf das Messsignal M moduliert wird, zeigt im optimalen Fall gute Autokorrelationseigenschaften und gute Kreuzkorrelationseigenschaften. Dies bietet den Vorteil, in Abhängigkeit von der Länge der Sequenz einen Korrelationsgewinn zu erhalten, welcher das Signal des identifizierbaren Reflektors 20 gegenüber anderen Reflektoren anhebt.

Der im Zusammenhang mit den Figuren oben beschriebene Reflektor 20 ist durch seine Signatur eindeutig von den anderen Reflektoren unterscheidbar, auch wenn keine räumliche Auflösung stattfinden kann. Durch die geeignete Wahl der aufmodulierten Signatur/Folge kann über eine Korrelation das Amplitudenverhältnis zwischen dem "wahren" Reflektor 20 und "ungewollten" Reflektionen gut unterschieden werden.

Das bei den Messeinrichtungen 10 eingesetzte Messprinzip kann darüber hinaus beispielsweise wie folgt ausgestaltet sein:

Zunächst wird die Entfernung vom Radarsender 11 zum Reflektor 20 und zurück zur Radarempfangseinrichtung 12 über die Laufzeit $\tau$ gemessen. Die Laufzeit $\tau$ ist dabei beschrieben durch:

$$\tau = \frac{2d}{c}$$

wobei d die Distanz zum Reflektor 20 und *c* die Lichtgeschwindigkeit ist. Wird zunächst von einem CW-Radar, d. h. einer abgestrahlten Sinusschwingung ausgegangen, kann dieses Sendesignal **x(t)** in Abhängigkeit von der Zeit **t** beschrieben werden durch:

$$x(t) = x_0 * \sin(2\pi f t + \varphi_0)$$

wobei $x_0$ die Amplitude, *f* die Frequenz und $\varphi_0$ die initiale Phase der Schwingung darstellt. Das Messsignal M wird durch die Funktion **y(t)** beschrieben und ist dabei eine zeitliche verzögerte Version vom Sendesignal **x(t)** um die Laufzeit $\tau$, so dass gilt:

$$y(t) = x(t + \tau)$$

$$y(t) = y_0 * \sin(2\pi f (t + \tau) + \varphi_0)$$

wobei $y_0$ die Amplitude des Messsignals M ist. Um eine Phasenauswertung durchführen zu können, geht man von einem komplexen Signal aus. Die Idee hinter einer IQ-Modulation (In-Phase-&-Quadrature-Phase Modulation) ist allgemein bekannt und beispielsweise beschrieben auf der Webseite https://de.wikipedia.org/wiki/I%26Q-Verfahren.

Die Phase kann als komplexer Zeiger beschrieben werden mit:

$$e^{-j2\pi f t} = \cos(2\pi f t) + j \sin(2\pi f t)$$

wobei das komplexe Zeitsignal durch Phase und Amplitude beschrieben wird durch:

$$x(t) = x_0 * e^{-j2\pi f t}$$

Das komplexe Messsignal M y(t) ist dann gegeben durch:

$$y(t) = x(t + \tau)$$

$$y(t) = y_0 * e^{-j2\pi f (t + \tau)}$$

d. h. eine zeitliche Verzögerung ruft eine zusätzliche Phasenrotation hervor. Diese Phasenrotation kann bei Veränderung der Distanz beobachtet werden.

Das Prinzip soll anhand eines Zahlenbeispiels verdeutlicht werden, bei dem das Radar beispielhaft bei einer Frequenz von 122,5 GHz betrieben wird. Die Wellenlänge beträgt dabei $\lambda_0$ = **2,44728537 mm.** Die Amplitude $y_0$ des Messsignals M kann aus der Pfadverlustdämpfung $L_p$ berechnet werden und der Distanz **d.** Die

Verzögerung $\tau$ wird für die beispielhafte Distanz **d = $1000 * \lambda_0$ = 2,44728537m** berechnet zu **16,32653ns.** Bei einer initialen Phase von $\varphi_0$ = 0 ergibt sich hieraus für das Ausgangssignal

$$y(t) = y_0 * e^{-j2\pi f (t + \tau)}$$

D. h. für den Beobachtungszeitpunkt *t* = 0 ist die Phase **arg($e^{-j2\pi f(t+\tau)}$)** = 0°. Wird nun die Distanz des Reflektors 20 um $\lambda_0/8$ vergrößert, d. h.

$$d = \left(1000 + \frac{1}{8}\right) * \lambda_0 = 2,4475912821m$$ , ist

die Verzögerung **16,32857ns.** Die Phase wird dann zu **arg($e^{-j2\pi f(t+\tau)}$)** = -90°.

Die Signalauswertung in der Auswerteinrichtung 13 kann eine Fourier-Transformation (typischerweise schnelle Fourier-Transformation FFT) einbeziehen. Da es sich bei den Messwerten in der Regel um Abtastwerte handelt, d. h. ein zeitdiskretes System vorliegt, wird vorzugsweise eine Diskrete Fourier-Transformation (DFT) angewendet. Dabei gibt es gewisse Grenzen bei der Auflösung im Frequenzbereich.

Beim FMCW Radar kann - wie oben bereits erwähnt - beispielsweise eine Frequenzrampe ausgesendet werden. Durch die Verzögerung der Reflexion tritt eine Differenzfrequenz $\Delta f$ zwischen Sende- und Empfangsfrequenz auf, welche direkt proportional zur Distanz ist. Typischerweise wird bei der Frequenzschätzung durch die DFT von einer Auflösung von **1/T** ausgegangen, wobei **T** die Beobachtungsdauer darstellt. Die Annahme beruht auf der Fensterung der Fourier-Transformation mit einem rechteckigen Fenster. Das Fenster erzeugt Nullen bei *f* - **1/T** und *f* + **1/T.** Die Distanz d wird vorzugsweise berechnet mit

$$d = c * \tau / 2$$

Die Distanzauflösung $\Delta d$ wird vorzugsweise berechnet durch:

$$\Delta d = \Delta \tau * c / 2$$

Die Chirprate R ist gegeben durch:

$$R = B/T,$$

wobei **B** die Bandbreite darstellt und **T** die Chirpdauer bzw. Beobachtungsdauer.

Die zeitliche Auflösung $\Delta \tau$ wird aus der Frequenzauflösung $\Delta f$ berechnet durch:

$$\Delta \tau = \Delta f / R$$

Daraus folgt:

$$\Delta \tau = \frac{1/T}{B/T} = 1/B$$

Somit ist die zeitliche Auflösung proportional zur Bandbreite.

Beträgt beispielsweise die Bandbreite $B = 1GHz$, so bedeutet dies eine zeitliche Auflösung von $\Delta \tau = 1ns$; somit ergibt sich eine Distanzauslösung $\Delta d = \Delta \tau * \frac{c}{2} = 0{,}15m$. D.h. der Abstand bei der Fourier-Transformation, welcher minimal voneinander getrennt werden kann, beträgt **0,15m.**

Würde die Messeinrichtung 10 lediglich die stärkste Frequenz auswerten, so ergibt sich eine diskreditierte Distanzmessung in einem Raster von **0,15m.** Erfolgt eine Bewegung innerhalb dieses **0,15m** Abschnitts, ist dies lediglich in der Phase des Signals sichtbar, wie im vorherigen Rechenbeispiel beschrieben wurde.

Zusammengefasst können die Messeinrichtungen gemäß den Figuren 1 bis 3 also auf dem Ansatz beruhen, in verschiedenen FFT-Bins hohe Amplituden durch die Ausgestaltung der Reflektoren 20 zu erzeugen. Die Reflektorabschnitte 21-27 der Reflektoren 20 sind vorzugsweise im Abstand von Vielfachen von **0,15m** angeordnet.

Die Reflektorabschnitte 21-27 können zusätzlich um einen Bruchteil der Wellenlänge verschoben werden, um innerhalb des FFT Bins eine Phasenverschiebung realisieren zu können, wie dies im ersten Rechenbeispiel mit **-90°** gezeigt wurde. Diese Phaseninformation kann durch die komplexe DFT aus dem Zeitsignal berechnet werden.

Die oben beschriebenen Reflektoren 20 können beispielsweise als "Reflexionsschwimmer" zur Füllstandsmessung eingesetzt werden. Die Kodierung des Reflektoren 20 ermöglicht eine eindeutige Identifikation und erlaubt, gewünschte Reflexionen vom jeweiligen Reflektor 20 von ungewünschten Störreflexionen beispielswese von Behälterwänden oder anderen Behälterteilen zu unterscheiden.

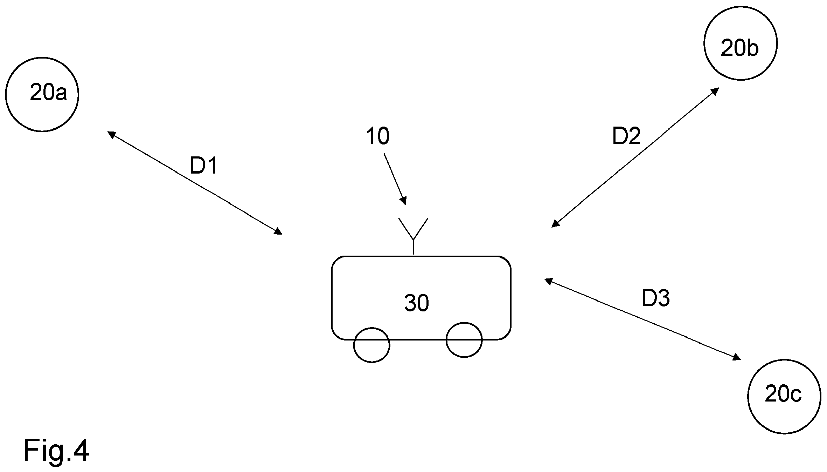

Auch können die oben beschriebenen Reflektoren 20 zur Navigation eingesetzt werden. In der Navigation ist beispielsweise das Prinzip der Landmarken bekannt. Auf einer Karte werden eindeutige Landmarken z. B. Bäume, Gebäude oder charakteristische Objekte eingezeichnet. Soll eine Selbstlokalisierung auf der Karte erfolgen, wird eine oder mehrere dieser Marken gesucht und somit die eigene Position erkannt. Ein identifizierbarer oder sogar eindeutig identifizierbarer Reflektor 20 kann so zum Beispiel bei der Selbstlokalisierung von fahrerlosen bzw. autonom fahrenden Fahrzeugen 30 innerhalb von Gebäuden eingesetzt werden (vgl. Figuren 4-6). Im Gegensatz zu Außenbereichen mit freier Sicht zum Himmel, wo GPS eine Lokalisierungslösung bietet, ist im Innenbereich das GPS-Signal jedoch im Allgemeinen abgeschattet und daher nicht verfügbar.

In einem Raum oder Gebäude können nun identifizierbare Reflektoren 20a bis 20c angebracht werden, die den Reflektoren 20 gemäß den Figuren 1 bis 3 entsprechen können (siehe Figur 4); d. h. in dem Gebäude werden künstliche Landmarken ausgebracht. Diese Reflektoren 20a bis 20c sind in einer Karte vermerkt, welche dem Fahrzeug 30 bekannt sind. Wird auf oder an dem Fahrzeug 30 eine Messeinrichtung 10 angebracht, wie sie im Zusammenhang mit den Figuren 1 bis 3 oben erläutert wurde, so kann diese zu den Reflektoren 20a bis 20c einen Abstand D1, D2 und D3 messen. Über eine Trilateration kann anschließend eine Selbstlokalisierung im Raum erfolgen und somit eine Navigation im Raum stattfinden.

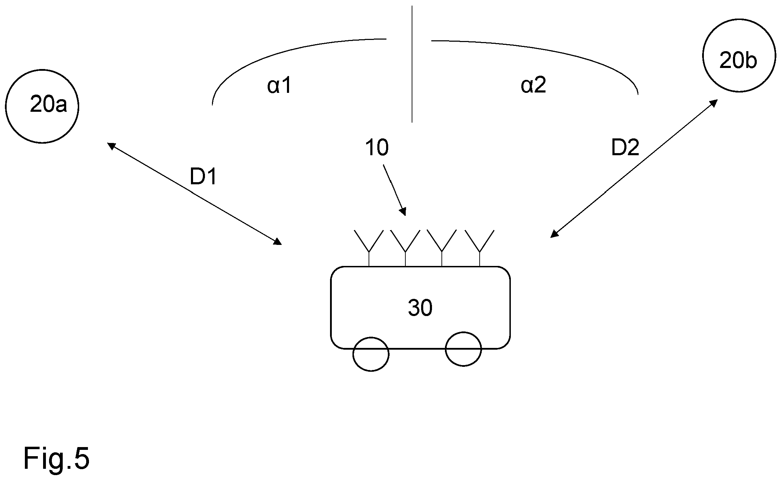

Bei einem Radarsystem (2D- oder 3D- Radar), welches eine Distanz und Winkelschätzung (siehe Figur 5 und Winkel $\alpha 1$ und $\alpha 2$) vornehmen kann, kann selbst mit nur zwei identifizierbaren Reflektoren 20a und 20b eine eindeutige Lokalisierung auf der Karte erfolgen, da eine Distanz und ein Winkel zum Reflektor 20 eine Position im Raum beschreiben. Der zweite Reflektor 20b kann auch dazu dienen, die eigene Rotation im Raum zu erkennen (siehe Figur 5).

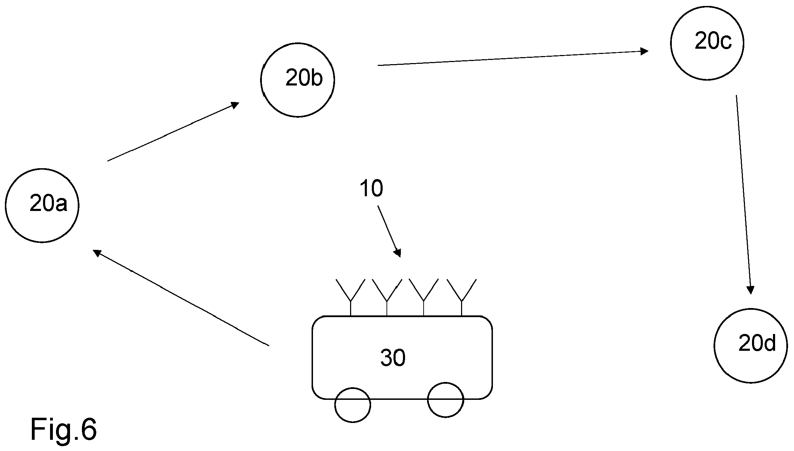

Auch eine einfache Art der Routenführung ist ohne eine Karteninformation möglich, nämlich durch ein Abfahren einer Abfolge von identifizierbaren Reflektoren 20a-20d im Raum. Hierzu werden beispielsweise mehrere Reflektoren 20a-20d in einem Raum in einer gewissen Reihenfolge aufgestellt. Das Fahrzeug 30 fährt z. B. auf einen ersten Reflektor 20a zu bis zu einem Mindestabstand. Anschließend sucht das Fahrzeug 30 dann einen zweiten Reflektor 20b und fährt wiederum zu diesem Reflektor 20b bis zu einem Mindestabstand usw. Hierdurch kann von dem Fahrzeug 30 eine Route abgefahren werden ohne jegliche Information über eine Karte (siehe Figur 6).

Der Vorteil der identifizierbaren Reflektoren ist hierbei, dass diese von anderen Reflexionen unterschieden werden können. Das Radarsystem wird in einem Raum immer viele Reflektionen z. B. auch von Wänden und Gegenständen im Raum erhalten. Diese Reflexionen weisen jedoch nicht die Signatur der Reflektoren auf und können somit über z. B. eine Korrelation mit den bekannten Reflektorsignaturen gefiltert werden.

Mit dem beschriebenen Ortungsverfahren kann beispielsweise auch das Anfahren eines Parkplatzes oder einer Ladestelle durch ein autonom fahrendes Fahrzeug in sicherer Weise gewährleistet werden.

Im Übrigen ist es möglich, mit der im Zusammenhang mit den Figuren 1 bis 3 beschriebenen Messeinrichtung und dem entsprechenden Messverfahren auch nur einen Abstand in einer sehr schwierigen Umgebung zwischen dem Reflektor und einem Sensor zu messen. Zum Beispiel kann gemessen werden, wie weit ein Kranausleger oder die Laufkatze eines Kranes auf einem Kran ausgefahren ist.

Eine weitere Anwendung kann darin bestehen, den seitlichen Ausfahrzustand bzw. die Ausfahrweite der seitlichen Stützen eines mobilen Krans zu messen.

Da ein Kran nämlich in der Regel aus sehr viel Metall besteht, werden bei radargestützten Abstandsmessungen sehr viele "ungewollte" Reflexionen auftreten, und es ist schwierig, die "wahre" bzw. die auszuwertende Reflexion zu finden. Der identifizierbare Reflektor hilft bei diesen Anwendungen in relevantem Umfange.

Eine weitere alternative Anwendung ist die Materialstärkenmessung bzw. Materialeigenschaftenmessung, z. B. Feuchte. Durch einen identifizierbaren Reflektor kann eine sehr gute Identifikation der "wahren" Reflexion erfolgen und gleichzeitig durch die Korrelation auf das Signal eine SNR (Signal zu Rausch Verhältnis)-Verbesserung erreicht werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Abschließend sei erwähnt, dass die Merkmale aller oben beschriebenen Ausführungsbeispiele untereinander in beliebiger Weise kombiniert werden können, um weitere andere Ausführungsbeispiele der Erfindung zu bilden.

Auch können alle Merkmale von Unteransprüchen jeweils für sich mit jedem der nebengeordneten Ansprüche kombiniert werden, und zwar jeweils für sich allein oder in beliebiger Kombination mit einem oder anderen Unteransprüchen, um weitere andere Ausführungsbeispiele zu erhalten.

**Patentansprüche**

1. Messeinrichtung (10) mit

   - mindestens einem Radarsender (11) zum Erzeugen eines Radarsignals (S),
   - mindestens einer Radarempfangseinrichtung (12) zum Messen eines Radarreflexionssignals (R) unter Bildung eines Messsignals (M) und
   - einer Auswerteinrichtung (13) zum Auswerten des Messsignals (M),
   **dadurch gekennzeichnet, dass**
   - die Auswerteinrichtung (13) das Messsignal (M) dahingehend prüft, ob dieses einen charakteristischen Signalverlauf aufweist, der als Referenzverlauf in der Auswerteinrichtung (13) mit Bezug auf eine zugeordnete Reflektoridentitätsangabe abgespeichert ist, und
   - die Auswerteinrichtung (13) - im Falle eines Erkennens des charakteristischen Signalverlaufs - das Messsignal (M) auswertet und anhand des Messsignals (M) ein Messergebnis (E) bildet und andernfalls das Messsignal (M) verwirft.

2. Messeinrichtung (10) nach Anspruch 1,
   **dadurch gekennzeichnet, dass**

   - in der Auswerteinrichtung (13) eine Vielzahl an charakteristischen Signalverläufen abgespeichert ist, denen jeweils eine Reflektoridentitätsangabe zugeordnet ist, und
   - die Auswerteinrichtung (13) - im Falle eines Erkennens eines der charakteristischen Signalverläufe - dem jeweiligen Messergebnis (E) die Reflektoridentitätsangabe zuordnet, die dem jeweils erkannten charakteristischen Signalverlauf entspricht, und das jeweilige Messergebnis (E) mit der zugehörigen Reflektoridentitätsangabe abspeichert.

3. Messeinrichtung (10) nach einem der voranstehenden Ansprüche,
   **dadurch gekennzeichnet, dass**
   sich die Messeinrichtung (10) anhand zumindest zweier Messergebnisse, denen jeweils eine Reflektoridentitätsangabe zugeordnet worden ist, selbst ortet, und zwar anhand eines Ortsangabedatensatzes, in dem zu den Reflektoridentitätsangaben jeweils Standorte abgespeichert sind.

4. Messeinrichtung (10) nach einem der voranstehenden Ansprüche,
   **dadurch gekennzeichnet, dass**
   die Messeinrichtung (10) dazu ausgebildet ist, den Ortsangabedatensatz selbst zu erzeugen, wenn sie während einer Kalibrationsfahrt zu Radarreflexionskörpern (20), zu denen Reflektoridentitätsangaben abgespeichert sind, oder zumindest zu einer Gruppe dieser Radarreflexionskörper (20) hinbewegt wird.

5. Messeinrichtung (10) nach einem der voranstehenden Ansprüche,
   **dadurch gekennzeichnet, dass**

   - der Radarsender (11) ein frequenzmoduliertes Radarsignal (S) erzeugt und
   - die Auswerteinrichtung (13) das Radarsignal (S) und das Radarreflexionssignal (R) unter Bildung eines Mischsignals mischt und das Messergebnis (E) durch Auswerten des Zwischenfrequenzspektrums des Mischsignals bildet, wobei die Auswerteinrichtung (13) im Rahmen der Auswertung das Mischsignal vorzugsweise dahingehend auswertet, ob das Zwischenfrequenzspektrum des Mischsignals den oder einen der charakteristischen Signalverläufe aufweist.

6. Messeinrichtung (10) nach einem der voranstehenden Ansprüche,
**dadurch gekennzeichnet, dass**

ein reflektierender Oberflächenabschnitt eines jeden der Radarreflexionskörper (20), denen eine Reflektoridentitätsangabe zugeordnet ist, eine reflektorindivuell vordefinierte Oberflächenstruktur aufweist, die den charakteristischen Signalverlauf des jeweiligen Radarreflexionskörpers (20), insbesondere das Zwischenfrequenzspektrum des Mischsignals, festlegt.

7. Messeinrichtung (10) nach einem der voranstehenden Ansprüche,
**dadurch gekennzeichnet, dass**

die vordefinierte Oberflächenstruktur ein Stufenprofil mit zumindest einer Stufe zwischen zwei benachbarten, vorzugsweise planen, Plateauflächen aufweist,

- die Stufenhöhe der zumindest einen Stufe und/oder der Abstand von Zwischenfrequenzen zwischen zumindest zwei Signalspitzen, die von den durch die zumindest eine Stufe getrennten benachbarten Plateauflächen im Zwischenfrequenzspektrum erzeugt werden, in der Auswerteinrichtung (13) abgespeichert sind und
- die Auswerteinrichtung (13) die vordefinierte Oberflächenstruktur anhand des Abstands der zwei Signalspitzen im Zwischenfrequenzspektrum erkennt.

8. Messeinrichtung (10) nach einem der voranstehenden Ansprüche,
**dadurch gekennzeichnet, dass**

die vordefinierte Oberflächenstruktur ein dielektrisches Stufenprofil, das durch die Hintereinanderanordnung von Materialien unterschiedlicher Dielektrizitätszahlen gebildet wird, aufweist.

9. Messeinrichtung (10) nach einem der voranstehenden Ansprüche,
**dadurch gekennzeichnet, dass**

die Auswerteinrichtung (13) die vordefinierte Oberflächenstruktur bzw. deren charakteristischen Signalverlauf im Messsignal (M) anhand eines Mustererkennungsverfahrens erkennt, insbesondere eines solchen, das seitens der Auswerteinrichtung (13) durch maschinelles Lernen erlernt worden ist.

10. Messeinrichtung (10) nach einem der voranstehenden Ansprüche,
**dadurch gekennzeichnet, dass**

die Messeinrichtung (10) eine Füllstandsmesseinrichtung ist, die anhand des Messergebnisses (E) einen Füllstandsmesswert bildet.

11. Fahrzeug (30), insbesondere Förderfahrzeug eines Fördersystems,

**dadurch gekennzeichnet, dass**

das Fahrzeug (30) eine Messeinrichtung (10) nach einem der voranstehenden Ansprüche aufweist.

12. Fahrzeug (30) nach Anspruch 11,
**dadurch gekennzeichnet, dass**

- das Fahrzeug (30) ein selbstfahrendes Fahrzeug (30) ist und dazu ausgebildet ist, in einem Kalibrationsfahrtmodus betrieben zu werden, bei dem mit der Messeinrichtung (10) Radarreflexionskörper (20), zu denen Reflektoridentitätsangaben abgespeichert sind, erfasst werden und das Fahrzeug anschließend zu den erfassten Radarreflexionskörpern (20) gesteuert wird,
- die Messeinrichtung (10) dazu ausgebildet ist, einen Ortsangabendatensatz selbst zu erzeugen, der den jeweiligen Ort der angefahrenen Radarreflexionskörper (20) beschreibt, und
- sich die Messeinrichtung (10) anschließend anhand zumindest zweier Messergebnisse, denen jeweils eine Reflektoridentitätsangabe zugeordnet ist, selbst ortet, und zwar anhand des Ortsangabendatensatzes, den sie zuvor selbst erstellt hat.

13. Anordnung mit einer Messeinrichtung (10) und zumindest einem Radarreflexionskörper (20),
**dadurch gekennzeichnet, dass**
die Messeinrichtung (10) eine Messeinrichtung (10) nach einem der voranstehenden Ansprüche ist,

- wobei ein reflektierender Oberflächenabschnitt eines jeden der Radarreflexionskörper (20) eine individuelle Oberflächenstruktur aufweist, und
- wobei in der Messeinrichtung (10) eine Vielzahl an charakteristischen Signalverläufen und deren jeweilige Reflektoridentitätsangabe abgespeichert sind.

14. Anordnung nach Anspruch 13,
**dadurch gekennzeichnet, dass**

- der Radarreflexionskörper (20) schwimmfähig und scheibenförmig ist und zwei einander gegenüberliegende Außenflächen aufweist,
- jede der zwei Außenflächen jeweils dieselbe vordefinierte Oberflächenstruktur aufweist und
- sich der Radarreflexionskörper (20), wenn er in eine Flüssigkeit fällt, in der Flüssigkeit selbst ausrichtet, und zwar derart, dass eine beliebige der zwei Außenflächen aus der Flüssigkeit herausragt und die jeweils andere der Flüssigkeit zugewandt ist.

15. Verfahren zum Bilden eines Messergebnisses (E), bei dem

- ein Radarsignal (S) erzeugt wird,
- ein Radarreflexionssignal (R), das - bei Auftreffen des Radarsignals (S) - von einem Radarreflexionskörper (20) reflektiert wird, unter Bildung eines Messsignals (M) gemessen wird und
- das Messsignal (M) unter Bildung des Messergebnisses (E) ausgewertet wird,

**dadurch gekennzeichnet, dass**

- das Messsignal (M) dahingehend geprüft wird, ob dieses einen charakteristischen Signalverlauf aufweist, der als Referenzverlauf in der Auswerteinrichtung (13) mit Bezug auf eine zugeordnete Reflektoridentitätsangabe abgespeichert ist, und
- - im Falle eines Erkennens des charakteristischen Signalverlaufs - das Messsignal (M) ausgewertet und anhand des Messsignals (M) das Messergebnis (E) gebildet wird und andernfalls das Messsignal (M) verworfen wird.

Fig.1

Fig.2

Fig.3

EP 4 105 679 A2

Fig.4

EP 4 105 679 A2

Fig.5

EP 4 105 679 A2

EP 4 105 679 A2

Fig.6